# EUROPEAN PATENT APPLICATION

(11) **EP 2 840 862 A1**
(43) Date of publication of application: **25.02.2015**
(21) Application number: 13180813.1
(22) Date of filing: 19.08.2013
(51) Int. Cl.: H04W 88/06, H04L 12/26, H04L 12/28, H04W 48/18, H04L 29/06

(54) **Network selection method and user device configured for performing such a method**

(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Busropan, Bryan Jerrel, Den Haag 2492 MR (NL); Norp, Antonius, 2584 EN The Hague (NL); Wissingh, Bastiaan, 2313 KZ Leiden (NL)
(74) Representative: Wuyts, Koenraad Maria

(57) **Abstract**

The disclosure relates to a method and a user device. The user device is configured for use in a system comprising at least a first network and a second network, wherein the second network is different from the first network. The system comprises a server system configured for assuming a verification state and a service providing state. The user device comprises a processor that is programmed for selecting a first network and transmitting a network operation verification signal to the server system in the service availability verification state of the server system to obtain a verification response from the server system. The processor generates a service unavailability indication for the service over the first network in response to a failed result for the verification response from the server system and selects a second network, different from the first network, in response to generating the service unavailability indication. The user device may access the service from the server system over the second network.

## Description

### FIELD OF THE INVENTION

The invention relates to a network selection method and user device configured for performing network selection. More particularly, the invention relates to a computer-implemented method for selecting a network for obtaining a service from a server system by a user device.

### BACKGROUND

Telecommunications networks that provide wireless access (e.g. GSM (2G), UMTS (3G), WiMax, LTE (4G)) have developed tremendously over the past decade. In such networks, voice and data services can be provided to user devices having a high mobility, i.e. the user devices are not bound to a particular location and are freely movable through the area covered by the network. A gateway node of the telecommunications network enables connection of a user device to a further network, for example a network based on IP such as the internet, where servers are arranged for providing a variety of services to the user devices. Other forms of wireless access networks to obtain services involve WLAN networks, as standardized under IEEE 802.11x and Bluetooth.

Most user devices are programmed to detect the availability of one or more wireless access networks and to select an available network from the detected wireless access networks. Selection of a particular telecommunications network for a mobile telephone is generally indicated to a user on a display by the display of the network operator name. Selection of a WLAN network is generally depicted on a display by the well-known symbol of partial concentric circles.

The telecommunications operator may restrict the networks that can be selected by a device having a subscription with that operator. The selectable networks are e.g. limited to the network(s) of the telecom provider having provided the subscription and (roaming) partner networks. Furthermore, communication devices by default select the best available network. As an example, when a user device (with 2G, 3G and 4G capability) is in an area having 2G, 3G and 4G coverage, the device is normally programmed to select the 4G network if available. When 4G coverage is not or no longer available, the device is instructed to select the 3G or 2G network.

A problem associated with the prior art manner of selecting networks is that this selection does not guarantee that service can be obtained by the user device over the selected network, even if radio coverage as such is indicated as being appropriate. Moreover, even though the connection to the radio network may or may seem to be appropriate from the connection symbols on the display, the service to be delivered over the selected network may be unavailable for all practical purposes. Poor service may be experienced, e.g. as a result of congestion in (a portion of) the network, network outage or restricted access on a public wifi hotspot.

### SUMMARY

The present disclosure presents a method and user device that improves service provisioning upon selecting a network in order to avoid or reduce poor service from a server system.

In one aspect, a method is disclosed for selecting a network by a user device for obtaining a service from a server system. The server system is configured for assuming a service availability verification state and for assuming a service providing state.

The user device selects a first network and transmits a network operation verification signal over the first network to the server system to obtain a verification response from the server system in the service availability verification state. The response may be received by the user device over the first network or over a different network.

The user device generates a service unavailability indication if the verification response from the server system yields a failed result. In response to the service unavailability indication, the user device selects a second network, different from the first network. Subsequently, the user device may access the service over the second network from the server system in the service providing state.

In another aspect, a user device is disclosed that is configured for use in a system comprising at least a first network and a second network, wherein the second network is different from the first network. The system comprises a server system configured for assuming a verification state and a service providing state. The user device comprises a processor that is programmed for selecting a first network and transmitting a network operation verification signal to the server system in the service availability verification state of the server system to obtain a verification response from the server system. The processor generates a service unavailability indication for the service over the first network in response to a failed result for the verification response from the server system and selects a second network, different from the first network, in response to generating the service unavailability indication. The user device may access the service from the server system over the second network.

In the above aspects, examples of a failed result may include the absence of a verification response, an erroneous verification response (e.g. the response contains an error code) or a response violating a pre-condition established in the user device (e.g. a response arriving outside a predetermined or set time window or not meeting a particular throughput condition).

The server system may comprise one or more servers. In a server system comprising at least a first server and a second server, the first server may be assuming or configured for the service availability verification state. The first server preferably is a server with a high uptime, e.g. higher than 99%, preferably higher than 99.9 or 99.99% of the time. A high uptime first server enables correct assessment of the operation status of the first network trajectory, because a failed result can then be assumed to be caused somewhere in the first network with high certainty.

It should be appreciated that the first network and the second network may be different because a portion of the networks is different. In other words, the network trajectory traversed by signals from the user device may partly overlap when exchanging data with the server system over the first network and the second network.

Finally, it is noted that if the network operation verification signal does not yield a failed result, the user device may request service from the server system in the service providing state over the first network.

The network operation verification signal may come in a variety of implementations.

The network operation verification signal may be transmitted for monitoring the operational state of the first network, i.e. without the user device actually requiring a connection with the server system for service provisioning other than the network operation verification service. To that extent, the user device may verify the network operation status of the first network from time to time, e.g. on predetermined times, e.g. periodically.

The network operation verification signal may result from an existing application running on the user device that is in communication with the server system. For example, a skype application transmitting a logon to a skype server may be considered a network operation verification signal to the server system. A failed result from the skype logon (e.g. a time out) may trigger selection of the second network. Alternatively, the user device may run a dedicated poor service detection application transmitting the network operation verification signal to the server system in the server availability verification state. The network operation verification signal may also be a signal or transmission used in connecting to the server system, e.g. a service invocation message or an attach request. Preferably, the network operation verification signal is independent from a or any signal generated by the user device to obtain the aimed service from the server system in the service providing state, because a failed result can then be assumed to be caused somewhere in the first network with high certainty.

By detecting a verification response from the server system over the selected first network, the availability of the service over the first network can be verified as far as the first network is concerned. Problems in the network of the telecommunications provider can be detected from the failed result in obtaining the response on the network operation verification signal. If such problems are detected, the first network is determined not to be available for providing the service from the server system in the service providing state and a different (second) network may be selected automatically under the control of the user device. Selection of the second network may involve selecting a different wireless access network and, possibly, a different associated core network.

One particular application of the disclosed network selection method and user devices involves services that relate to so-called machine-to-machine (M2M) communications, also referred to as machine-type communications (MTC). The service requirements for MTC are currently being standardized in 3GPP (see e.g. TS 22.368). MTC applications typically involve hundreds, thousands or millions of user equipment (MTC devices) which each act as a user equipment to the telecommunication network. Such MTC devices may be stationary or non-stationary. An example involves the electronic reading of e.g. 'smart' electricity meters at the homes of a large customer base over the telecommunications network from a server connected to a further network. Other examples include sensors, meters, vending or coffee machines, car meters for route pricing applications, navigation equipment etc. that can be equipped with communication modules that allow exchanging information with other equipment, such as a data processing centre over the telecommunications network. The MTC devices often operate without human presence and automated selection of the second network upon detecting problems on the first network is especially beneficial for such devices.

In one embodiment, the server system comprises a first server and a second server, different from the first server, and wherein the first server operates in the verification state and the second server operates in the service providing state. By having a separate first server and second server, a distinction can be made between appropriate operation of the first network and appropriate operation of the server system in the service providing state to provide the aimed for service. If no failed result is obtained in such a system from transmitting a network operation verification signal, selection of a second network will not be helpful in case no service is available from the second server.

In one embodiment, addressing information of the first server is pre-configured or configurable in the user device. The first server may be a dedicated service availability server for verifying the operational state of the first network for providing services to the user device.

In one embodiment, the first network comprises a plurality of protocol layers and the failed result relates to a connection failure on at least one of the protocol layers. Networks may be described in terms of a layered model (e.g. the OSI model) and a connection is thought to be established by individual connections on any of these protocol layers. Lower protocol layers provide services to higher protocol layers. A response from the server system in the verification state on a certain layer can only be obtained when each of the lower protocol layers of the network (the first network) provides the appropriate service(s). At least one network operation verification signal may be transmitted for at least one of the layers. If at least one of the verified protocol layers or one of the lower protocol layers is dysfunctional, the network operation verification signal will yield a failed result at the user device which is an indication that the user device, while having selected the first network, will not be able to obtain the service from the first server over the first network. The failed result will trigger the user device to select another network, i.e. the second network. Furthermore, a plurality of different protocol network operation verification signals may be transmitted for a single layer to find out the network operation state of the first network for each of these protocols. Alternatively, different network operation verification signals may be transmitted for different ports of the server system.

In one embodiment, selecting the first network by the user device is performed prior to transmitting an attach request to the first network. This first network selection by the user device may be either triggered by a user command, the user device itself (e.g. pre-configured), or by a network command.

In one embodiment, the user device transmits, after having selected the first network, the network operation verification signal. This signal may comprise at least one of transmitting an attach request to the first network, establishing a data connection with the server system and transmitting data over the established data connection. The failed result is obtained as a result of a failure in at least one of these steps. If at least one of these steps cannot be performed over the first network, it is highly unlikely that service can be obtained from the server system in the service providing state over the first network and the failed result triggers selection in the user device of another network to approach the server system in the service providing state. Again, preferably the network operation verification signal is independent from a or any signal related to the aimed for service requested by the user device from the server system in the service providing state, because a failed result can then be assumed to be caused somewhere in the first network with high certainty.

Several embodiments have been envisaged for selecting the second network under the control of the user device.

In one embodiment, the first network that is selected applies a first radio access technology and the second network applies a second radio access technology. The first and second network are operated by the same network operator. Different radio access technologies (RATs) involve GSM, UMTS, LTE, etc. Detection of a poor service over the first network triggers the user device to select another network.

Another embodiment involves the selection of a second network having a different access technology than the first network. This distinction may include the distinction between local networks (LAN) and non-local networks, such as the previously mentioned 2G, 3G and 4G networks. E.g. a WLAN operating under IEEE 802.11x may be a first network and the second network may be any of the 2G, 3G or 4G networks or vice versa.

In the previous embodiments, once a failed result is obtained for the first network (which may be the preferred or most preferred network), the device selects a less preferred network and, if this network also yields a failed result, an even lesser preferred network can be selected, such that the service can be obtained via the eventually selected network. Prior art RAT selection procedures do not enable changing the RAT when poor service is detected. After a predefined time interval, the user device may reselect the first network to verify whether the originally selected network is able to participate in the service provisioning from the first server.

The user device, in one embodiment, performs the step of determining availability of the second network by a network availability scan process and selects the second network from a result of the network availability scan process. In particular, after a failed result has been obtained for the first network, the user device may store information relating to the first network (or RAT) and then initiates a scan for available networks. The result of the network availability scan is a list of available networks. A network from the available networks not being the stored (first) network(s) may be selected. This process may be repeated until no further networks can be found that are able to convey the service between the user device and the server system in the service providing state. A time out period may be applicable to avoid continuous retries/rescans.

In yet another embodiment, the user device selects a first network from a first mobile network operator and, after having obtained the failed result, selects the second network from a second mobile network operator. Various alternatives have been envisaged to implement this embodiment.

In one alternative, the user device comprises a first subscriber identity module (SIM) for accessing the first network and a second subscriber identity module for accessing the second network. A SIM is linked to a specific network and selection of a network can only be obtained with an appropriate SIM. Selection of the first network involves applying the first SIM and selection of the second network, after having obtained the failed result, involves applying the second SIM.

In another alternative, a single SIM is applied when selecting the first network and the second network. This alternative involves the use of the International Mobile Subscriber Identity (IMSI) that is authorised to access both the first and second network.

A dual (or multiple) IMSI SIM may be applied, wherein one IMSI is used as the home IMSI (the operator associated with the first network) and the other IMSI(s) have roaming agreements with other operators. The first IMSI is applied for selecting the first network. If a failed result is obtained, the second IMSI is applied and, accordingly, the service is accessed via the network of the second operator.

A single IMSI may also be applied for selection of the networks. When the user device is operated in a roaming environment, the first network and second network may both be networks of operators having roaming agreements with the home country operator associated with the IMSI.

It is noted that the invention relates to all possible combinations of features recited in the claims.

### BRIEF DESCRIPTION OF THE DRAWINGS

Aspects of the invention will be explained in greater detail by reference to exemplary embodiments shown in the drawings, in which:
FIG. 1 is a schematic basic illustration of a system according to an embodiment of the invention;
FIG. 2 is a schematic illustration of a user device according to an embodiment of the invention;
FIG. 3 is a flow chart illustrating steps of a method for a user device according to an embodiment of the invention;
FIG. 4 is a time diagram illustrating steps of a method according to further embodiment of the invention.
FIG. 5 is a schematic illustration of a system comprising an LTE and a UMTS telecommunications network connecting via further network to a server system comprising a first server and a second server; and
FIG. 6 is a diagram illustrating message exchanges between the user device and the LTE telecommunications network.

### DETAILED DESCRIPTION OF THE DRAWINGS

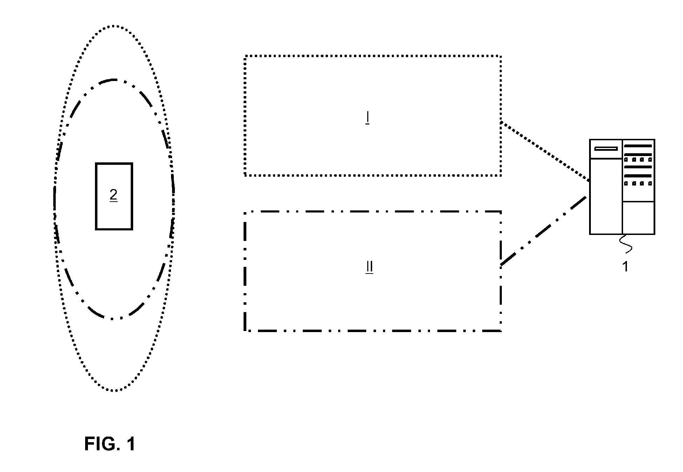

FIG. 1 is a basic illustration of a system comprising a server system 1 connected to a first telecommunications network I (schematically drawn as a dotted rectangle) and a second telecommunications network II (schematically drawn as a dash-dotted rectangle). First telecommunications network I and second telecommunications network II both provide wireless radio coverage to a user device 2 as illustrated by the oval dotted and dash-dotted lines encompassing user device 2. It should be appreciated that the system may comprise more networks and user devices than depicted in FIG. 1.

Server system 1, which may or may not comprise several servers, may assume a network operation verification state and a service providing state. For example, server system 1 may provide a network operation verification service and a further service. The network operation verification service assists the user device 2 in deciding which of the telecommunications networks I, II to use for the further service. The further service may e.g. comprise the transfer of data collected by the user device 2 to the server system 1 and/or the transfer of data from the server system 1 to the user device 2.

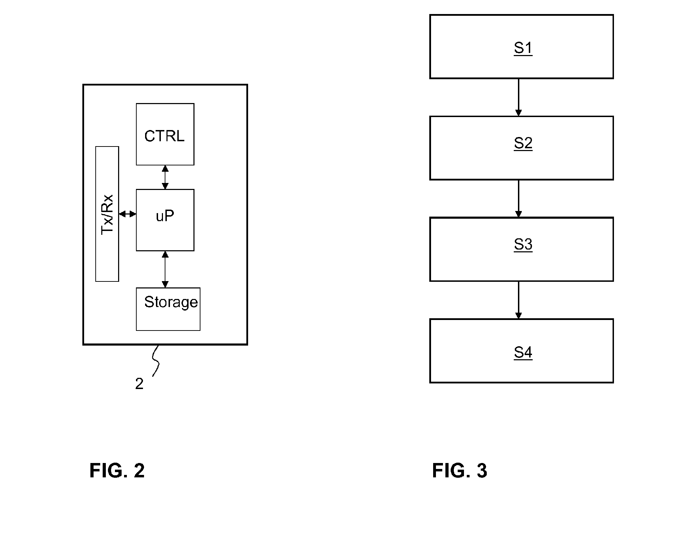

Operation of the system of FIG. 1 will be further described with reference to FIGS. 2 and 3.

FIG. 2 is a schematic block diagram illustrating a user device 2 according to an embodiment of the invention. In the block diagram, some components for performing the disclosed method are schematically illustrated. Functions disclosed in the present application may be implemented in hardware, software or in a hybrid fashion.

The user device 2 contains at least a processor uP for executing actions, a controller CTRL for controlling actions by the processor uP and one or more forms of storage for storing computer programs and (intermediate) processing results. Obviously, the user device 2 comprises a communication interface Tx/Rx, at least for communication with a telecommunications network I, II. A similar configuration holds for the server system 1, wherein the communication interface Tx/Rx comprises an interface with e.g. a wired network.

User device 2 may e.g. be a device configured for machine type communications MTC. Such devices, typically, should be enabled to operate without human interaction.

In step S1 of FIG. 3, user device 2 selects first telecommunications network I since appropriate radio coverage is detected from this telecommunications network. Selection of this network is performed in a manner known as such to the skilled person.

In step S2, user device 2 attempts to transmit a network operation verification signal to server system 1 over the first telecommunications network I. To that end, user device 2 has stored a pre-configured or configurable address of server system 1 in its storage. A configurable address may be configured e.g. by downloading settings to the user device 2, by OTA provisioning, or through a user interface. It is assumed in this embodiment, that user device 2 performs the method by an application that is at least partly dedicated to the network selection method according to the present disclosure. For example, processor uP may run an application dedicated to selection of an appropriate network I, II. Alternatively, processor uP of user device 2 may run an application of which part of the code is configured for selection of the appropriate network I, II.

In step S3, user device 2 detects poor service and generates a service unavailability indication. Such an indication is indicative that the further service cannot be delivered satisfactorily over the first network I for user device 2. Poor service is detected by detecting a failed result subsequent to transmitting the network operation verification signal. A failed result may be the absence of a response at the user device 2 from the server system 1 to the transmission of the network operation verification signal. The failed result may also be a verification response signalling an error. Still further, the failed result may be a response violating a pre-condition established in the user device 2. For example, user device 2 may determine that, although a verification response is received, the response was received outside a predetermined time interval determined by a timer that was started upon transmitting the network operation verification signal. Alternatively, user device 2 may determine that the throughput via the network I does not meet a pre-set threshold. It is noted that it is not necessary that a verification response is received by the user device 2 over the same network as the network over which the network operation verification signal has been transmitted. The verification response may be received over a different network or different network trajectory that the user device is attached or connected to or can connect to in order to receive the verification response.

In response to determining service unavailability, user device 2 selects the second telecommunications network II as indicated by step S4 and accesses the service from server system 1 over the second network II.

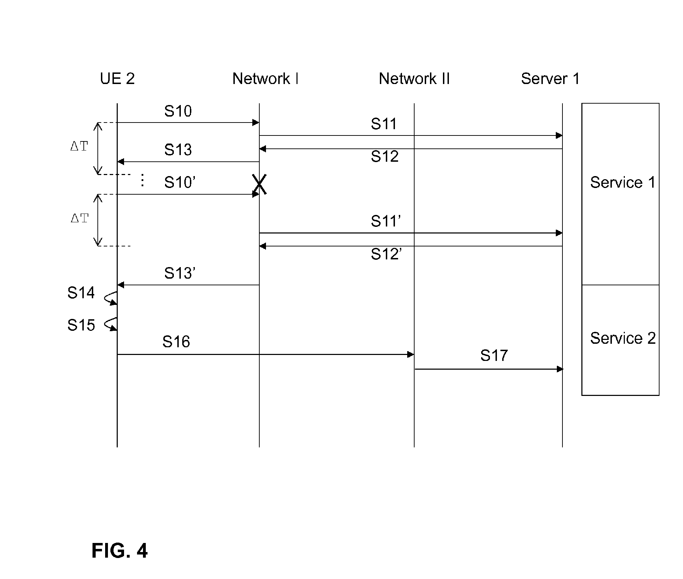

FIG. 4 is a more detailed timing diagram illustrating a method according to a further embodiment of the invention.

After having selected the first network I, user device 2 (also indicated as user equipment UE), transmits a network operation verification signal S10 via the first network I to server system 1 in step S11. Server system 1 may comprise one or more servers. Server system 1 is in a service 1 state which is a network operation verification state. This state may be invoked by the receipt of the network operation verification signal in step S11, e.g. by determining a request type from the particular UE 2. In step S12, the server system 1 in the service 1 state responds with a verification response via the first network I and UE 2 receives the verification response in step S13. UE 2, using software run on processor uP, determines e.g. that the verification response is received within a preset time interval ΔT. If UE 2 needs to exchange data with e.g. server system 1 in the service providing state Service 2, it will do so via the first network I (not shown).

UE 2 repeatedly transmits network operation verification signals (e.g. periodically). At a particular point in time, network I gets congested as indicated by the cross. In step S10', UE 2 again transmits a network operation verification signal via the first network I and receives a verification response in step S13' after verification with the server system 1 in the verification state Service 1 in steps S11' and S12'. Verification response S13' is received, possibly via a different network, however, after expiry of the time interval ΔT and therefore a service unavailability indication is generated in UE 2 in step S14. Under the control of controller CTRL, UE 2 automatically now selects the second network II in step S15.

If UE 2 has data to transmit to server system 1, it may do so over the second network II instead of over the congested first network I as illustrated in steps S16 and S17.

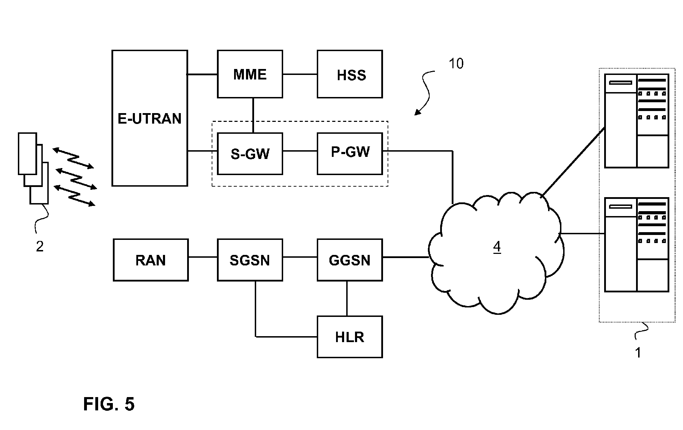

FIG. 5 is a schematic illustration of a telecommunications system 10. The telecommunications system 10 enables establishing connections for user data, also referred to as data sessions or as PDP Contexts, between a server system 1 and a user device 2 over a packet data network 4, wherein access of the user device 2 to the telecommunications network 10 is wireless.

In the telecommunications system 10 of FIG. 5, three generations of networks are schematically depicted together for purposes of brevity. A more detailed description of the architecture and overview can be found in 3GPP TS 23.002 which is included in the present application by reference in its entirety.

The lower branch of FIG. 5 represents a GPRS or UMTS network comprising a Gateway GPRS Support Node (GGSN), a Serving GPRS Support Node (SGSN) and a Radio Access Network (RAN or UTRAN). For a GSM/EDGE radio access network (GERAN), the RAN comprises a Base Station Controller (BSC) connected to a plurality of Base (Transceiver) Stations (BSs, BTSs), both not shown. For a UMTS radio access network (UTRAN), the RAN comprises a Radio Network Controller (RNC) connected to a plurality of NodeBs), also not shown. The GGSN and the SGSN are conventionally connected to a Home Location Register (HLR) or Home Subscriber Server (HSS) that may contain subscription information of the user devices 2.

The upper branch in FIG. 5 represents a next generation network, commonly indicated as Long Term Evolution (LTE) or Evolved Packet System (EPS). Such a network comprises a PDN Gateway (P-GW) and a Serving Gateway (S-GW). The E-UTRAN of the EPS comprises evolved NodeBs (eNodeBs or eNBs) providing wireless access for a device 2 that is connected to the S-GW via a packet network. The S-GW is connected to a Home Subscriber Server HSS and a Mobility Management Entity MME for signalling purposes. The HSS may include a subscription profile repository SPR.

Further information of the general architecture of a EPS network can be found in 3GPP TS 23.401.

Of course, architectures other than defined by 3GGP, e.g. WiMax or cable networks, can also be used within the context of the present disclosure.

UE 2 is assumed to have appropriate radio coverage from the wireless access networks E-UTRAN and RAN.

For poor service detection mechanisms on wireless access networks, it is assumed an initial network selection phase has taken place and that UE 2 has chosen which network to attach to. Assuming UE 2 is in this state, there are different stages in the communication between UE 2 and server system 1 wherein the UE 2 may experience poor service. Poor service can have various causes, e.g. congestion on the wireless part of the network E-UTRAN (e.g. no or insufficient traffic channels available), problems within the core network or problems at the side of the server system.

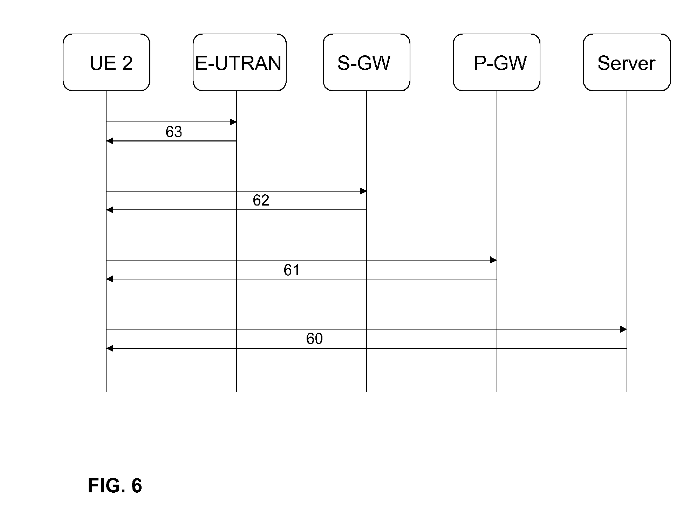

FIG. 6 illustrates various protocol layers 60-63 from which a failed result may occur when the LTE network as schematically depicted in FIG. 5 is assumed to be the first network I.

The last layer at which UE 2 can detect whether it has a poor service is illustrated in FIG. 6 by 60, the end-to-end service bearer. At this stage it is assumed that all lower stages 61-63 were successfully completed and the UE 2 tries to connect to the server system to obtain a further service, for example from a web server running HTTP.

At this stage multiple scenarios can arise in which the UE 2 detects poor service. UE 2 is for example connected to the LTE network of provider A and tries to access a local news webpage on the server. The access request to the local new webpage can be considered a network operation verification signal in this example. The server receives the request but detects that the IP address from the UE 2 is not in the list of IP ranges allowed to retrieve content from the server resulting in a HTTP 403.6 response from the server to the UE 2 on the network of provider A. This response can be interpreted by the UE 2 as a failed result to start the "poor service" network selection procedure and select another network B than that of provider A in order to access the web page on the server from the other network operator B through which the server can be accessed. In this example the server allows access for requests coming from network B based on the IP-domain that the operator B uses. The (second) network of provider B may be the 3G network shown in FIG. 5.

A preceding lower layer that can cause UE 2 to experience poor service is illustrated in FIG. 6 by 61, the EPS Bearer setup. At this stage it is assumed that all previous lower stages 62, 63 have been established successfully and the UE 2 tries to setup an EPS Bearer in order to send data via the LTE network towards the server. This is the network operation verification signal. In order for UE 2 to be able to send data via the LTE network, it needs to be assigned an IP address for an EPS Bearer by the P-GW of the LTE network it is connected to. If for example the UE 2 has successfully completed the lower stages 62 and 63 but during the setup of stage 61 it does not receive an IP address from the P-GW (a failed result) due to for example it is not granted via the P-GW by a Radius Server (not shown in FIG. 5), UE 2 is unable to send any data to the server. In this case the UE 2 has detected poor service which automatically causes UE 2 to start the network selection procedure and select a second network in order to try to successfully complete the setup of stage 61 and send data to the server.

In a preceding lower stage 62, UE 2 tries to set up an EPS Bearer with an APN (Access Point Name) that is not known in the network of operator A (a network operation verification signal). The request will be rejected and the failed result will initiate a "poor service" network selection procedure to automatically select a second network. Assuming that the requested APN is known in second network, then the session set-up will be successful.

The lowest stage 63 is when UE 2 is trying to set up a session, but the network (cell) is so congested that there are no radio traffic channels available to be allocated to the UE 2. The failed result will then initiate a "poor service" network selection procedure and select a second network.

Several methods have been envisaged for selection of the second network.

The switch from the first network to the second network may encompass a switch between 2G, 3G and 4G networks of an operator, and a switch between a mobile network and a non-mobile network (e.g. 4G to wifi).

Such switches from one network to another after poor service is detected encompasses the user device 2 to store the network that was selected as the first network. The user device 2 initiates a new network scan for a second network to determine whether 2G, 3G, 4G, wifi etc. is available. The user device 2 then selects the best available network as a second network or determines a preferred order of second networks. If all available networks experience poor service or if there is no available alternative network, then the first network is reselected. A time out period may be used to avoid continues retries/scans.

The switch from the first network to the second network may also comprise a switch between networks of different operators.

Such a switch may be performed within a single IMSI/single SIM configuration, a dual SIM configuration or a dual IMSI configuration for the user device 2.

For the single IMSI/single SIM configuration, after the UE 2 has determined poor service, the UE 2 will initiate a selection process for a second network. To that end, the selected first network is added to a list of selected networks. A search is then initiated for available (second) network(s) and a network is selected that is not on the list of selected networks since these are the network(s) for which a failed result was obtained. For the selected second network, the normal network attach procedure is started. If the UE 2 can attach to this new second network, further service can be obtained over the second network. If not, a network attach is started for the next available network. If there are no other available second networks, the first network is tried again. Retry timers may be adjusted to a higher value (e.g. 2 hours). If a second network was selected and obtaining the further service was successful, reselection of the first network may be performed after a certain time (e.g. 24 hours when is it reasonable to assume that the congestion or the cause of poor service of the first/preferred network is over).

For the dual SIM configuration, after the UE 2 has determined that there is poor service, the UE 2 will initiate a network reselection by selecting the second SIM instead of the first SIM. The normal network attach procedure may be initiated using the second SIM. The APN name may be modified. If the UE 2 can attach to the second network, the further service may be obtained from the server. If not, a reselection of the first SIM and the first network may be performed and retry timers may be adjusted to higher values. Again, if transmission over the network associated with the second SIM was successful, reselection of the first network may be performed after a certain time.

For the dual IMSI configuration, after the UE 2 has determined that there is poor service, the UE 2 will initiate a network reselection by adding the selected network to a list of selected networks. The second IMSI is then selected and a scan for available second network(s) is performed. A network is selected that is not on the list of selected networks (these are the networks for which the failed result was obtained). A normal attach procedure may then be performed using the second IMSI. The APN name may be modified. If the UE 2 can attach to this new second network, further service can be obtained over the second network. If not, a network attach is started for the next available network. If there are no other available second networks, the first network is tried again using the first IMSI. Retry timers may be adjusted to a higher value (e.g. 2 hours). If a second network was selected and obtaining the further service was successful, reselection of the first network may be performed after a certain time (e.g. 24 hours when is it reasonable to assume that the congestion or the cause of poor service of the first/preferred network is over.)

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

With some modifications, one skilled in the art may extend the embodiments described herein to other architectures, networks, or technologies.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" compris-comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

## Claims

1. A computer-implemented method for selecting a network for obtaining a service by a user device from a server system, wherein the server system is configured for assuming a verification state and a service providing state, the method comprising the steps of:
- selecting a first network by the user device;
- transmitting a network operation verification signal over the first network to the server system by the user device to obtain a verification response from the server system in the verification state of the server system;
- generating a service unavailability indication by the user device for the service over the first network in response to a failed result for the verification response from the server system in the verification state;
- selecting a second network, different from the first network, by the user device in response to determining service unavailability from the generated service unavailability indication; and
- accessing the service from the server system by the user device over the second network in the service providing state of the server system.

2. The method according to claim 1, wherein address information for connecting to the first server system in the verification state is pre-configured or configurable in the user device.

3. The method according to one or more of the preceding claims, wherein the server system comprises a first server and a second server, different from the first server, and wherein the first server operates in the verification state and the second server operates in the service providing state, the method further comprising the steps of:
- transmitting the network operation verification signal over the first network to the first server to obtain the verification response from the first server;
- generating the service unavailability indication in response to a failed result for the verification response from the first server;
- selecting the second network in response determining service unavailability from the generated service unavailability indication; and
- accessing the service from the second server by the user device over the second network.

4. The method according to one or more of the preceding claims, wherein the first network comprises a plurality of protocol layers and the failed result relates to a connection failure on at least one of the protocol layers.

5. The method according to one or more of the preceding claims, wherein the service unavailability indication is generated following the failed result for the verification response, the failed result comprising at least one of the absence of a verification response, an erroneous verification response received over the first network and a verification response violating a pre-condition established in the user device.

6. The method according to one or more of the preceding claims, wherein selecting the first network by the user device is performed prior to transmitting an attach request to the first network.

7. The method according to one or more of the preceding claims, wherein the network operation verification signal comprises at least one of:
- transmitting an attach request over the first network;
- establishing a data connection over the first network;
- transmitting data over the established data connection; and
wherein the failed result is obtained as a result of a failure in at least one of these steps.

8. The method according to one or more of the preceding claims, wherein the first network and the second network comprise access networks having different radio access technologies or different access protocols.

9. The method according to claim 8, wherein the user device further performs the step of determining availability of the second network by a network availability scan process and selecting the second network from a result of the network availability scan process.

10. The method according to one or more of the preceding claims, wherein the first network selected by the user device is operated by a first mobile network operator and the second network selected by the user device is operated by a second mobile network operator.

11. A computer program comprising software code portions configured for performing, when executed by a processor, the steps of one or more of the preceding claims.

12. A user device configured for use in a system comprising at least a first network and a second network and a server system configured for assuming a verification state and a service providing state, wherein the user device is configured for:
- selecting a first network;
- transmitting a network operation verification signal to the server system in the verification state over the first network to obtain a verification response from the server system;
- generating a service unavailability indication for the service over the first network in response to a failed result for the verification response from the server system;
- selecting a second network, different from the first network, in response to generating the service unavailability indication;
- accessing the service from the server system over the second network.

13. The user device according to claim 12, wherein the user device is further configured for performing the steps of one or more of the claims 2-10.

14. A server system for use in a method according to one or more of the claims 1-10, configured for assuming a service availability verification state and for assuming a service providing state.

15. The server system according to claim 14, wherein the server system comprises a first server configured for assuming the service availability verification state and a second server, separate from the first server, for assuming the service providing state.
